Europäisches Patentamt

(19) European Patent Office

Office européen des brevets

(11) Publication number: **0 076 262**
**B1**

(12) . EUROPEAN PATENT SPECIFICATION

(45) Date of publication of patent specification: **26.03.86**

(51) Int. Cl.⁴: **G 01 V 1/38,** G 01 V 1/02, B 63 B 1/00

(21) Application number: **81902753.3**

(22) Date of filing: **30.09.81**

(86) International application number:
**PCT/NO81/00037**

(87) International publication number:
**WO 82/03695 28.10.82 Gazette 82/26**

(54) ARRANGEMENT FOR CARRYING OUT SEISMIC PROSPECTION OF THE SEA BED.

(30) Priority: **10.04.81 NO 811256**

(43) Date of publication of application:
**13.04.83 Bulletin 83/15**

(45) Publication of the grant of the patent:
**26.03.86 Bulletin 86/13**

(84) Designated Contracting States:
**DE FR GB NL SE**

(56) References cited:
EP-A-0 018 053
CA-A-1 025 288
FR-E- 60 707
GB-A- 826 932
GB-A-1 417 948

(73) Proprietor: **GEOPHYSICAL COMPANY OF NORWAY A.S.**
**Veritasveien 1**
**N-1322 Hövik (NO)**

(72) Inventor: **HAUGLAND, Tor-Arvid**
**Langleiken 26**
**N-1349 Rykkinn (NO)**
Inventor: **SELVAER, Ole-Kristian**
**N-8772 Selvaer (NO)**
Inventor: **KLEIVEN, Atle**
**N-5149 Myking (NO)**

(74) Representative: **Barrett, James William et al**
**A.A. THORNTON & CO. Northumberland House**
**303-306 High Holborn**
**London WC1V 7LE (GB)**

## Description

The present invention relates to an arrangement for seismic prospection of the sea bed.

In one form of seismic prospecting powerful sound waves are transmitted towards the bottom and sound wave reflections from various strata under the bottom are recorded, and the recordings are used as a basis for closer studies.

The sound waves are generated by air guns supplied with compressed air from a towing vessel, and are fired according to a certain program. The air guns are suspended from buoys or other buoyant bodies and are located a few meters beneath the surface of the sea. Since each air gun is suspended from a separate buoy, the positions of the air guns in the previously known equipment will be strongly influenced even by small wave movements, and these deviations from presumed position may have an unfavourable effect on the results of the measurements. This in particular applies to variations in the depth of the air guns beneath the sea surface, but also the mutual horizontal spacing of the air guns is of much interest in this connection. Examples of relevant known techniques are disclosed in EP—A—0018053 and GB—A—1417948.

The object of the present invention is to overcome the disadvantages of the prior proposals and, accordingly, the invention provides arrangement for carrying out seismic prospection of the sea bed by firing seismic energy sources adjacent the surface of the sea, in which a number of seismic energy sources are suspended from an elongate buoyant body being towed behind a vessel with the towing cable from the vessel attached to the buoyant body, characterised in that the buoyant body is shaped so as to have in operation a draught (DD) which is larger than the free-board (FB) and the width (W) thereof.

The buoyant body may be a float, a paravane or the like, which is little or not at all influenced by small wave movements, and which follow larger wave movements in a more correct way from a seismic prospecting point of view, than a chain of air guns suspended each from a separate buoy.

The invention will be explained more closely in the following description with reference to the drawing in which:

Figure 1 shows the aft end of a vessel which tows a paravane with air guns according to the invention,

Figure 2 shows the same as Figure 1, but with the paravane floating in a different wave form, and

Figure 3 shows a preferred cross sectional shape of the paravane.

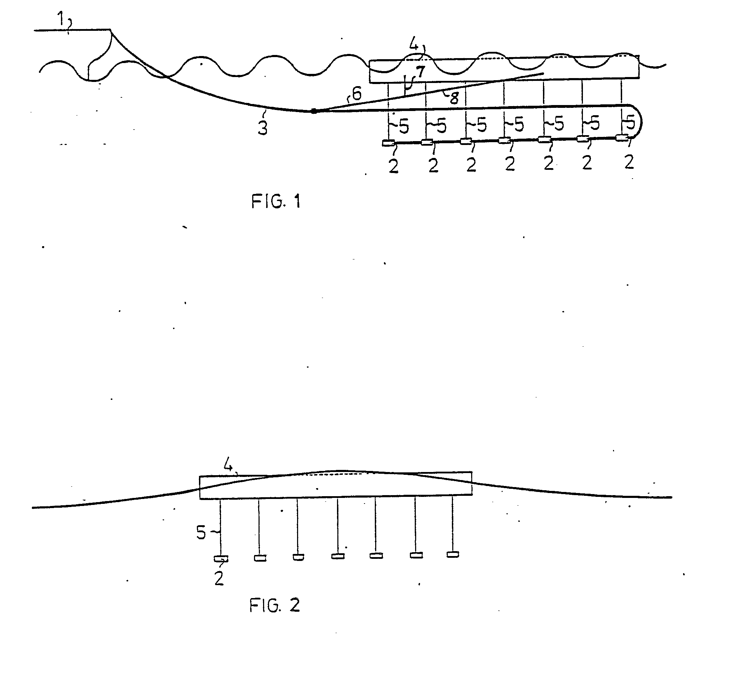

In Figure 1 a vessel 1 is towing air guns 2 which in a manner known per se are supplied with compressed air through a hose 3 extending between the vessel 1 and the air guns 2. The air guns are fired according to a certain program and the propagation pattern of the sound waves form the basis for evaluating the structure of the sea bed. Experience has shown that a number of for example seven guns per paravane give a satisfactory sound pulse shape, provided that one knows at the firing instant where the guns are located in the water. It is difficult to determine this with the previously known arrangements of such air guns when there are wave formations on the water surface. Even small waves lead to changes in the position of the air guns independently of each other, with accompanying unfavourable effects, as explained above.

The air guns 2 are suspended from a buoyant body 4 which may be an elongate float of sufficient buoyancy, and each air gun is attached to the buoyant body by means of a line 5. In the example shown the buoyant body is a good 20 meters long and is towed behind the vessel 1 in a line 6 which along a portion of its length may be combined with the hose 3. Advantageously the buoyant body 4 may be shaped as a paravane because then it is able to follow the vessel 1 laterally with respect thereto, and there may be employed two or more paravanes on each side of the vessel. By firing simultaneously for example four series of air guns there is obtained a sound wave pattern which is an advantage for the investigations. The paravane 4 with associated air guns 2 will have a more quiet movement in the sea than air guns being suspended each in a separate buoy. In Figure 1 there is an indication of small sea waves which would have a disturbing effect on the previously known arrangements, but which in the case of the paravane according to the invention, give satisfactory results.

Also in the case of increasing wave length, in particular in the case of ocean swells which are often present, the air guns 2 with the arrangement according to the invention, will have a more correct movement in the sea, which is shown in Figure 2. All air guns beneath the buoyant body will be aligned and will have substantially the same depth under the water surface.

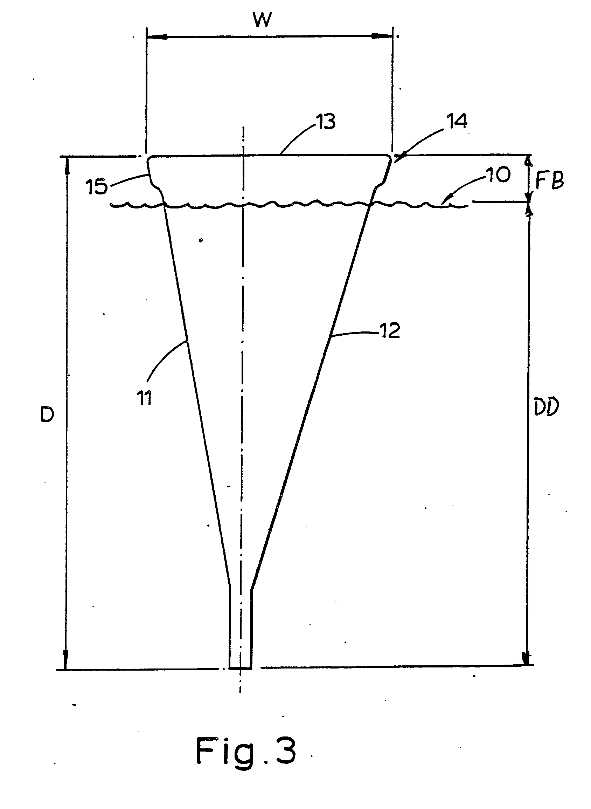

Figure 3 shows the hull shape of a paravane as a substantially triangular profile. There is indicated a water surface 10 with the deck 13 of the paravane lying a small distance above the water surface, so that there will be a rather low freeboard F.B. The deck 13 is shown as being mainly plane, and one side face 11 of the hull forms an angle close to 90° with the deck 13. The other side face 12 forms an acute angle with the first side face, so that the depth D of the hull will be substantially larger than the width W thereof. With a length of for example 20 m as mentioned above, the width may be 0,35 m and the depth 0,75 m. The unsymmetry of the hull profile serves to facilitate the towing out laterally with respect to the vessel, as mentioned above.

An extended part 15 projects laterally from the deck 13 above the side faces 11 and 12. This projecting part is advantageous inter alia for the stability of the paravane, since it constitutes a buoyant reserve. It is obvious that such a projecting part may be formed only on one side of the hull, and in such case above the more vertical side face 11.

With the hull shape shown, which has a large depth in relation to its width and narrowing downwardly, it is obtained in principle that the immersed or wetted surface of the hull, the draught DD is subject to a minimum of variations in operation, which means that the paravane or buoyant body is subjected to the least possible undesired movements or accelerations which may result in variation of the air gun positions. Having this in mind it is also of substantial importance that the towing line from the vessel is attached directly to the buoyant body, as will appear from Figure 1, and not to the air guns, as hitherto has been usual in seismic prospecting.

The anchoring of towing line 6 to the buoyant body 4 according to Figure 1 is effected via two steel wire pieces 7 and 8 which facilitate the towing of the buoyant body laterally with respect to the vessel.

## Claims

1. Arrangement for carrying out seismic prospection of the sea bed by firing seismic energy sources adjacent the surface of the sea, in which a number of seismic energy sources (2) are suspended from an elongate buoyant body (4, 14) being towed behind a vessel (1) with the towing cable (6) from the vessel attached to the buoyant body, characterised in that the buoyant body (4, 14) is shaped so as to have in operation a draught (DD) which is larger than the free-board (FB) and the width (W) thereof.

2. Arrangement according to claim 1, characterised in that the buoyant body (14) has a depth (D) which is at least twice as large as its width (W).

3. Arrangement according to claim 2, characterised in that the width (W) of the buoyant body (14) decreases with depth.

4. Arrangement according to claim 3, characterised in that the cross-sectional shape of the buoyant body (14) is substantially triangular, in which a substantially plane deck (13) forms an angle close to 90° with one (11) of the side faces of the buoyant body.

5. Arrangement according to any one of the preceding claims, characterised in that adjacent the top of one or both side faces (11, 12) of the buoyant body (14) there is provided a lateral projection (15) which constitutes a reserve buoyancy.

6. Arrangement according to any one of the preceding claims, characterised in that one of the side faces of the buoyant body (4) is provided with two pulling elements (7, 8), preferably in the form of wire pieces, to which the towing cable (6) from the vessel is attached.

## Revendications

1. Dispositif pour effectuer la prospection sismique du lit marin en activant des sources d'énergie sismique au voisinage de la surface de la mer, dans lequel plusieurs sources d'énergie sismique (2) sont suspendues à un corps flottant allongé (4, 14) remorqué derrière un navire (1), le câble de remorquage (6) partant du navire étant fixé au corps flottant, caractérisé en ce que le corps flottant (4, 14) est conformé de façon à présenter, en cours de fonctionnement, un tirant (DD) supérieur à sa hauteur de franc-bord (FB) et à sa largeur.

2. Dispositif selon la revendication 1, caractérisé en ce que le corps flottant (14) a une profondeur (D) au moins double de sa largeur (W).

3. Dispositif selon la revendication 2, caractérisé en ce que la largeur (W) du corps flottant (14) diminue avec la profondeur.

4. Dispositif selon la revendication 3, caractérisé en ce que la forme de section droite du corps flottant (14) est sensiblement triangulaire, un pont (13) sensiblement plan faisant un angle proche de 90°C avec l'une (11) des faces latérales du corps flottant.

5. Dispositif selon l'une des revendications précédentes, caractérisé en ce qu'une saillie latérale (15), constituant une réserve de flottabilité, est présente au voisinage du haut de l'une ou chacune des deux faces latérales (11, 12) du corps flottant (14).

6. Dispositif selon l'une des revendications précédentes, caractérisé en ce que l'une des faces latérales du corps flottant (4) comporte deux éléments de traction (7, 8) de préférence sous la forme de sections de câble, auxquels le câble de remorquage (6) partant du navire est fixé.

## Patentansprüche

1. Anordnung zum seismischen Untersuchen des Meeresgrundes durch Abfeuern von seismischen Energiequellen im Bereich des Meeresspiegels, wobei eine Anzahl von seismischen Energiequellen (2) an einem langgestreckten Schwimmer (4, 14) aufgehängt ist, der von einem Schiff (1) geschleppt wird und an dem das von dem Schiff kommende Schleppseil (6) angebracht ist, dadurch gekennzeichnet, daß der Schwimmer (4, 14) so ausgebildet ist, daß er im Betrieb einen Tiefgang (DD) hat, der größer ist als sein Freibord (FB) und seine Breite (W).

2. Anordnung nach Anspruch 1, dadurch gekennzeichnet, daß die Tiefe (D) des Schwimmers (14) mindestens das Doppelte seiner Breite (W) beträgt.

3. Anordnung nach Anspruch 2, dadurch gekennzeichnet, daß die Breite (W) des Schwimmers (14) mit seiner Tiefe abnimmt.

4. Anordnung nach Anspruch 3, dadurch gekennzeichnet, daß der Schwimmer (14) im Querschnitt im wesentlichen dreieckig ist und ein im wesentlichen ebenes Deck (13) mit einer (11) der Seitenflächen des Schwimmers einen Winkel von annähernd 90° einschließt.

5. Anordnung nach einem der vorhergehenden Ansprüche, dadurch gekennzeichnet, daß im Bereich des oberen Randes einer oder beider Seitenflächen (11, 12) des Schwimmers ein seitlicher Vorsprung (15) zum Erzeugen eines Reserveauftriebes vorgesehen ist.

6. Anordnung nach einem der vorhergehenden Ansprüche, dadurch gekennzeichnet, daß eine der Seitenflächen des Schwimmers (4) mit zwei Zugelementen (7, 8), vorzugsweise in Form von Drahtstücken, versehen ist, an denen das von dem Schiff kommende Schleppseil (6) angebracht ist.

FIG. 1

FIG. 2

Fig.3